(19) Europäisches Patentamt
European Patent Office
Office européen des brevets

(11) **EP 4 269 020 A1**

(12) **EUROPEAN PATENT APPLICATION**
published in accordance with Art. 153(4) EPC

(43) Date of publication:
**01.11.2023 Bulletin 2023/44**

(21) Application number: **22771289.0**

(22) Date of filing: **11.03.2022**

(51) International Patent Classification (IPC):
**B23K 37/06** (2006.01)     **B23K 9/16** (2006.01)

(52) Cooperative Patent Classification (CPC):
**B23K 9/16; B23K 37/06**

(86) International application number:
**PCT/JP2022/010756**

(87) International publication number:
**WO 2022/196541 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021 JP 2021044200**

(71) Applicant: **JFE Steel Corporation**
**Tokyo 100-0011 (JP)**

(72) Inventors:
• **ISHIGAMI, Atsushi**
**Tokyo 100-0011 (JP)**
• **TAKADA, Atsushi**
**Tokyo 100-0011 (JP)**
• **OKABE, Takatoshi**
**Tokyo 100-0011 (JP)**

(74) Representative: **Grünecker Patent- und Rechtsanwälte**
**PartG mbB**
**Leopoldstraße 4**
**80802 München (DE)**

(54) **GAS-SHIELDED ARC WELDING METHOD, WELDED JOINT, AND WELDED-JOINT PRODUCTION METHOD**

(57)     Provided are a gas-shielded arc welding method, a welded joint, and a method for producing the welded joint. In gas-shielded arc welding including one-side butt welding of steel plates in the present invention, a ceramic-made backing material is attached to a bottom surface of a groove, and root pass is performed in one pass using a welding current I of 200 to 450 A and a welding voltage V of 25 to 50 V while a welding heat input Q is controlled within the range defined by formula 1 below.

$$0.4 \times G - 1 \leq Q \leq 0.6 \times G + 1 \quad \text{(formula 1)}$$

Here, G in formula 1 is a root gap (mm).

FIG. 1

**Description**

Technical Field

The present invention relates to a gas-shielded arc welding method, a welded joint obtained using the gas-shielded arc welding method, and a method for producing the welded joint. In particular, the present invention relates to a root pass method in gas-shielded arc welding of steel plates.

Background Art

In recent years, the height and span of building structures have tended to increase, and this has led to a demand for extra-thick high-strength steel plates used as building steel plates. To ensure the structural integrity of buildings, it is important to prevent brittle fracture in steel structures, and one particularly significant issue is to ensure the mechanical properties of welds. Generally, when steel plates are welded together, the area of the groove increases as the thickness of the plates increases. Therefore, the welding heat input necessary to obtain sufficient penetration while the groove is filled with the weld metal increases, and the cooling rate of the weld decreases. This causes a reduction in the mechanical properties of the weld.

To reduce the welding heat input, multi-layer multipass welding is effective in reducing the welding heat input. However, as the number of welding passes increases, the efficiency of the procedure decreases. Therefore, to reduce the number of welding passes in one-side butt welding while the welding heat input is reduced, it is important to reduce the groove angle or the root gap to thereby reduce the groove area. However, when the groove angle or the root gap is reduced, a problem arises in that welding defects such as incomplete fusion of the walls of the groove can easily occur.

To address the foregoing problem, for example, Patent Literature 1 discloses a technique for preventing incomplete fusion by using a welding machine including a rotatable wire feeding tube and a mechanism for allowing a welding wire to be inclined with respect to a welding torch. Patent Literature 2 discloses a technique for preventing incomplete fusion by using a combination of magnetic oscillation and current waveform control. These welding methods are effective in preventing incomplete fusion in narrow-gap welding, but a specially designed device need to be introduced. Patent Literature 3 discloses a technique for preventing incomplete fusion by dividing a weld seam into a plurality of sections and oscillating an electrode in the direction of the weld seam. However, with this welding method, the welding cannot be performed continuously over the entire weld seam, and therefore the efficiency of the operation is problematic.

Citation List

Patent Literature

PTL 1: Japanese Unexamined Patent Application Publication No. 53-81453
PTL 2: Japanese Unexamined Patent Application Publication No. 62-118975
PTL 3: Japanese Unexamined Patent Application Publication No. 2000-141031

Summary of Invention

Technical Problem

As described above, when steel plates are subjected to one-side butt welding, the conventional welding methods are problematic in terms of achieving the efficiency of the procedure, the quality of welds, and the simplicity of the device simultaneously. It is an object of the present invention to provide a root pass method in a gas-shielded arc welding method that is used for one-side butt welding of steel plates and allows high procedure efficiency and good weld quality to be obtained without using a special device. It is also an object to provide a welded joint with high structural integrity obtained by welding using the above method and a method for producing the welded joint. Solution to Problem

The present inventors have produced welded joints by subjecting steel plates to one-side butt-welding using gas-shielded arc welding under various test conditions and evaluated the quality of the welds and the characteristics of the welds. Then the inventors have found that, by applying a ceramic-made backing material to the bottom surface of the groove and selecting appropriate root pass conditions according to the shape of the groove, good weld quality and good weld characteristic are obtained.

The present invention has been made on the basis of the above findings and completed as a result of further studies. The present invention is summarized as follows.

[1] A gas-shielded arc welding method for one-side butt welding of steel plates, the method including, with a ceramic-made backing material attached to a bottom surface of a groove, performing root pass in one pass using a welding current I (A) of 200 to 450 A, a welding voltage V (V) of 25 to 50 V, and a welding heat input Q (kJ/mm) within a range defined by the following formula 1:

$$0.4 \times G - 1 \leq Q \leq 0.6 \times G + 1 \qquad \text{(formula 1)}$$

where G in formula 1 is a root gap (mm).

[2] The gas-shielded arc welding method according to [1], wherein the groove has an groove angle θ of 35° or less.

[3] The gas-shielded arc welding method according to [1] or [2], wherein the groove has an groove angle θ of 20° or less, and the root gap G (mm) is 7 to 15 mm.

[4] The gas-shielded arc welding method according to any one of [1] to [3], wherein, in the root pass, a welding wire containing 0.015 to 0.100% by mass of a rare earth metal (REM) is used, and the welding is performed with straight polarity.

[5] A welded joint welded using the gas-shielded arc welding method according to any one of [1] to [4].

[6] A method for producing a welded joint, the method using the gas-shielded arc welding method according to any one of [1] to [4].

Advantageous Effects of Invention

According to the present invention, in the root pass in the gas-shielded arc welding method for performing one-side butt welding of steel plates, high procedure efficiency and high weld quality can be obtained by one pass welding without using a specially designed device etc., and industrially significant effects are obtained.

Brief Description of Drawings

[Fig. 1] Fig. 1 is a schematic cross-sectional view showing the shape of a groove in one embodiment of the invention.
[Fig. 2] Fig. 2 is a schematic cross-sectional view showing the shape of a root weld metal in the embodiment of the invention.
[Fig. 3] Fig. 3 is a correlation diagram showing the correlation between a welding heat input Q and a root gap G in the invention.

Description of Embodiments

First, one embodiment of the gas-shielded arc welding method of the present invention will be described.

The present invention is a gas-shielded arc welding method for performing one-side butt welding of steel plates. In this welding method, two steel plates having a prescribed thickness are butted against each other, and the butted steel plates are joined together by gas-shielded arc welding (which may be hereinafter referred to simply as "welding"). In the present invention, the welding conditions when root pass in this welding method is performed are defined.

Specifically, in the root pass, a ceramic-made backing material is attached to the bottom surface of a groove between the steel plates, and the root pass is performed in one pass using a welding current I (A) of 200 to 450 A and a welding voltage V (V) of 25 to 50 V such that welding heat input Q (kJ/mm) is controlled within the range defined by formula 1 described later (such that the welding heat input Q (kJ/mm) satisfies formula 1).

Modes of the structural requirements of the invention will be specifically described.

[Steel plates]

The steel plates used in the invention are steel plates used for steel structures such as buildings and ships. Examples of the strength of the steel plates include 490 MPa-grade steel plates, 550 MPa-grade steel plates, 590 MPa-grade steel plates, and 780 MPa-grade steel plates.

The thickness t (mm) of the steel plates is preferably in the range of 20 to 100 mm.

[Groove angle θ]

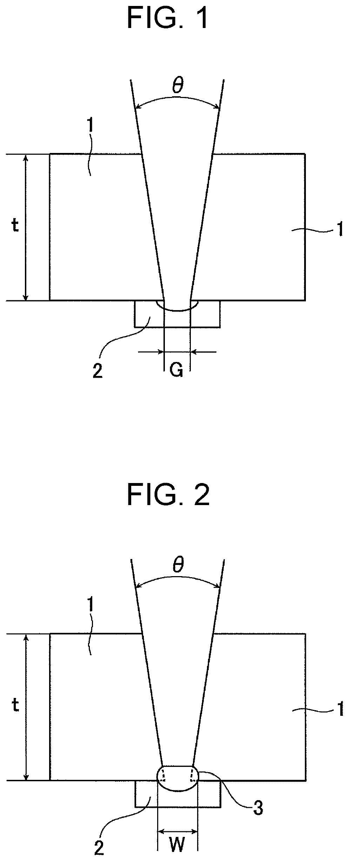

Fig. 1 is a cross-sectional view of two butted steel plates in their thickness direction and illustrates the shape of the groove between the steel plates. As shown in Fig. 1, the angle between the groove face of the butted steel plates 1 is defined as an groove angle (groove angle) θ (°)

In the present invention, no particular limitation is imposed on the groove angle θ of the butt groove. However, from the viewpoint of welding efficiency, the groove is preferably a narrow groove of 35° or less. If the groove angle θ exceeds 35°, the cross-sectional area of the groove is large. Therefore, the number of welding passes in the subsequent passes increases, and high procedure efficiency is not obtained. If the groove angle θ is less than 0° (i.e., if the upper portion of the groove is narrower than its bottom portion), incomplete fusion occurs at the bottom portion of the groove. Therefore, the lower limit of the groove angle θ is 0°.

When rare earth metal (REM) are added to the welding wire used and straight polarity is employed, the groove angle can be further reduced, and the procedure efficiency can be further improved. Specifically, the groove angle θ is more preferably from 0° to 20° inclusive. The groove angle θ is preferably from 0° to 10° inclusive.

[Root gap G]

As shown in Fig. 1, in the present invention, the root gap, which is the narrowest lower gap of the groove portion between the butted steel plates 1, is represented by G (mm). When the groove angle θ is set to from 0° to 20° inclusive, it is preferable to set the root gap G in the present invention to 7 to 15 mm. This is because, if G is less than 7 mm, the electrode cannot be inserted into the groove and because, if G exceeds 15 mm, it is difficult to perform the root pass in one pass. G is more preferably 8 mm or more and is more preferably 14 mm or less.

[Ceramic-made backing material]

In the gas-shielded arc welding in the present invention, the ceramic-made backing material that can be detached after the welding is used as a backing material for preventing burn-through. No particular limitation is imposed on the ceramic-made backing material, so long as it can prevent burn-through and allow a penetration bead to be formed. The ceramic-made backing material used may have, for example, a chemical composition containing, in % by mass, $SiO_2$: 30 to 70%, $Al_2O_3$: 10 to 50%, and MgO: 3 to 20%. A ceramic-made backing material with glass fibers deposited thereon may also be used.

The reason that the ceramic-made backing material is used is as follows. When a gap is present between the base material and the backing material, the gap serves as a stress concentration zone that may become the origin of fatigue cracking or brittle fracture. However, by using the ceramic-made backing material to allow a penetration bead to be formed, the gap between the base material and the backing material can be eliminated.

[Welding current I]

If the welding current I (A) in the root pass is lower than 200 A, the arc pressure is low, and the bottom portion of the groove is not easily melted. If the welding current I (A) in the root pass is higher than 450 A, the feedability of the welding wire becomes unstable, so that the welding becomes unstable. Therefore, the welding current I (A) in the root pass is 200 to 450 A. The welding current I (A) is preferably 200 to 350 A.

[Welding voltage V]

If the welding voltage V (V) in the root pass is lower than 25 V, the arc cannot be stably maintained. In this case, the welding may be unstable, and the weld bead tends to have a convex shape. If the welding voltage V (V) in the root pass is higher than 50 V, the arc pressure is low, and the bottom portion of the groove is not easily melted. Therefore, the welding voltage V (V) in the root pass is 25 to 50 V. The welding voltage V (V) is preferably 28 to 40 V and more preferably 30 to 40 V.

[Welding speed S]

The range of the welding speed S in the root pass is preferably 50 to 300 mm/min. If the welding speed S is excessively low, the amount of penetration in the bottom portion of the groove decreases. If the welding speed S is excessively high, an undercut tends to occur. The welding speed S is more preferably from 100 mm/min to 250 mm/min inclusive. The welding speed S can be appropriately selected within the above range according to the balance between the welding current I and the welding voltage V.

[Welding heat input Q]

If the welding heat input in the root pass is excessively low, the bottom portion of the groove is not easily melted. If the welding heat input in the root pass is excessively high, the height of the weld metal relative to the width of the weld metal becomes large, and hot cracking easily occurs in the weld metal. Therefore, the welding heat input Q in the root pass is set such that the relation between the root gap G (mm) and the welding heat input Q (kJ/mm) satisfies the following formula 1.

$$0.4 \times G - 1 \leq Q \leq 0.6 \times G + 1 \qquad \text{(formula 1)}$$

Here, "G" in formula 1 is the root gap (mm).

The value of the welding heat input Q (kJ/mm) in formula 1 can be determined using the formula [I $\times$ V $\times$ 60 / S / 1000]. Here, I is the welding current (A); V is the welding voltage (V); and S is the welding speed (mm /min). More preferably, the welding heat input Q (kJ/mm) in the present invention satisfies formula 1 above and is 1 to 12 kJ/mm.

Q in formula 1 above is preferably (0.4 $\times$ G - 0.5) or more and is preferably (0.6 $\times$ G + 0.5) or less.

[Polarity of welding]

The polarity of the welding (root pass) may be selected from any of straight polarity (in which the steel material is connected with the positive terminal and the welding wire is connected with the negative terminal) and reverse polarity (in which the steel material is connected with the negative terminal and the welding wire is connected with the positive terminal). However, when the groove angle θ is small and the root gap G is small, the arc tends to be directed toward the groove face, and the bottom portion of the groove is not easily melted. Therefore, it is preferable that the polarity of the welding is set to the straight polarity and that an REM-added wire (welding wire) described later is used for the welding. This is because the arc is easily concentrated on the bottom portion of the groove, so that the bottom portion of the groove can be stably melted.

[Welding wire]

As for the components of the welding wire, the welding wire contains, on a mass basis (in % by mass), C: 0.05 to 0.15%, Si: 0.10 to 1.00%, Mn: 0.80 to 2.60%, P: 0.030% or less, and S: 0.030% or less, with the balance being Fe and incidental impurities. Note that "% by mass" is denoted simply by "%," unless otherwise specified.

C: 0.05 to 0.15%

C is an element that is important for the weld metal to have sufficient strength and has the effect of reducing the viscosity of the molten steel to thereby improve its fluidity. If the content of C is less than 0.05%, this effect is not obtained. If the content of C exceeds 0.15%, the behavior of molten droplets and the molten pool becomes unstable, and also the toughness of the weld metal decreases. Therefore, the content of C is preferably 0.05 to 0.15%. The content of C is more preferably 0.05 to 0.10%.

Si: 0.10 to 1.00%

Si is an element that has a deoxidization effect and is essential for deoxidization of the weld metal. Si further has the effect of preventing the spread of the arc in the straight polarity welding to thereby increase the number of times of molten droplet transfer. If the content of Si is less than 0.10%, these effects are not obtained. If the content of Si exceeds 1.00%, the arc becomes unstable, and the number of spatters increases. Therefore, the content of Si is preferably 0.10 to 1.00%. The content of Si is more preferably 0.30 to 1.00%.

Mn: 0.80 to 2.60%

Mn is an element that has the deoxidization effect, as does Si, and is essential for the deoxidization of the weld metal. If the content of Mn is less than 0.80%, the degree of deoxidization is insufficient, and blow defects occur in the weld metal. If the content of Mn exceeds 2.60%, the toughness of the weld metal decreases. Therefore, the content of Mn is preferably 0.80 to 2.60%. The content of Mn is more preferably 1.00 to 2.00%.

P: 0.030% or less

If the content of P exceeds 0.030%, the viscosity of the molten steel in straight polarity $CO_2$ gas-shielded arc welding decreases, and the arc becomes unstable, so that the number of small spatters increases. Moreover, the risk of the occurrence of hot cracking in the weld metal increases. Therefore, the content of P is preferably 0.030% or less. The content of P is more preferably 0.020% or less.

S: 0.030% or less

If the content of S exceeds 0.030%, the number of small spatters increases, and the toughness of the weld metal decreases. Therefore, the content of S is preferably 0.030% or less. The content of S is more preferably 0.020% or less.

In the present invention, a welding wire containing these components and further containing rare earth metal (REM) is used, and the welding is performed with straight polarity. In this case, spray transfer of molten droplets occurs, and the adhesion of spatters to the groove face of the groove can be prevented. Moreover, when the groove angle is small and the root gap is small, the generation of an arc on the groove face of the groove is prevented, and the bottom portion of the groove can be stably melted. Therefore, the groove area can be further reduced, and the procedure efficiency can be further improved.

Examples of the REMs include elements such as Sc, Y, La, and Ce. If the total content of the REMs in the welding wire is excessively small, the above effects are not obtained. If the REM content is excessively large, cracking may occur in a process of producing the welding wire. If the REM content is less than 0.015%, the above effects are not obtained. If the REM content exceeds 0.100%, the stabilization of the arc is inhibited, and a reduction in the melting speed of the welding wire occurs. Therefore, the total content of the REM elements is preferably 0.015 to 0.100%. The REM content is more preferably 0.020 to 0.050%.

As described above, the welding wire preferably used for the welding in the present invention has a chemical composition containing, in % by mass, REMs: 0.015 to 0.100%, C: 0.05 to 0.15%, Si: 0.10 to 1.00%, Mn: 0.80 to 2.60%, P: 0.030% or less, and S: 0.030% or less, with the balance being Fe and incidental impurities.

The welding wire used in the present invention may be any of various wires with different specifications. Examples of the welding wire include YGW11, YGW18, G59JA1UC3M1T, and G78A2UCN4M4T that are classified according to JIS Z 3312. The diameter $\phi$ of the wire is preferably 0.6 to 2.0 mm.

[Welding shielding gas]

The welding shielding gas used is preferably a gas mixture having a chemical composition containing 20% by volume or more of $CO_2$ gas with the balance being an inert gas such as Ar, in order to stabilize the arc. In consideration of the welding workability, the amount of $CO_2$ gas is more preferably 100% by volume. The flow rate of the gas is preferably 10 to 50 L/min.

[Multilayer welding]

The present invention is applied to root pass in multilayer welding of steel plates. When the present invention is carried out, the welding conditions for passes following the root pass are suitably set. The number of layers in the second and subsequent passes after the root pass depends on the thickness of the steel material etc. When the thickness is 20 to 100 mm as described above, the number of layers is preferably 5 to 30. The welding conditions for the passes following the root pass are preferably, for example, a welding current of 250 to 350 A, a welding voltage of 30 to 42 V, and a welding speed of 200 to 600 mm/min. In the welding method of the present invention, one layer is formed in one pass in the root pass, and two or more passes are performed for each layer of the second and subsequent layers.

Next, embodiments of the welded joint of the invention and the method for producing the welded joint will be described.

The welded joint (gas-shielded arc welded joint) of the invention is a welded joint produced by welding two butted steel plates using the gas-shielded arc welding method described above.

The method for producing the welded joint of the invention includes: the step of butting two steel plates against each other such that the groove face of the two steel plates form a groove with a prescribed groove angle $\theta$; and a welding step of performing multilayer welding on the steel plates using the welding wire described above under specific welding conditions to thereby form a weld bead. In this manner, the two butted steel plates are joined together, and a welded joint is thereby produced. In this production method, the above-described gas-shielded arc welding method is applied to the root pass in the multilayer welding in the welding step. The welding conditions for the passes following the root pass are appropriately set and may be, for example, the same as the welding conditions for the root pass. The descriptions of the steel plate, the welding conditions, etc. are the same as those described above and will be omitted.

As described above, with the welding method of the invention including the root pass described above, the procedure efficiency in the root pass is good even when the welding is performed in one pass without using a specially designed device etc., and the welded joint obtained through the root pass has good weld quality.

The "good procedure efficiency" means that the welding can be performed using a groove having a narrow groove angle $\theta$ of 35° or less.

The "good weld quality" means as follows. Specifically, the good weld quality means that, in "Penetration stability" measured by a method described later in Examples, the difference between the largest penetration width and the smallest penetration width in cross sections of ten cross-sectional macro samples is 2.0 mm or less and also means that, in "Hot cracking" inspected by a method described in the Examples, no hot cracking, which is a welding defect, occurs. Moreover, it is more preferable, in terms of the weld quality, that, in "Spatters" evaluated using a method described in the Examples, no adhesion of spatters to the walls of the groove occurs.

EXAMPLES

In Examples, two steel plates having a thickness of 50 mm were butted against each other to form a groove as shown in Fig. 1, and a welded joint was produced by one-side gas-shielded arc welding under prescribed welding conditions. As described above, the ceramic-made backing material used has a chemical composition containing, in % by mass, $SiO_2$: 30 to 70%, $Al_2O_3$: 10 to 50%, and MgO: 3 to 20%. The component values of each of the welding wires used are shown in Table 1, and the test conditions such as the welding conditions in the root pass are shown in Table 2.

The welding shielding gas used was a gas mixture containing 20% by volume or more of $CO_2$ gas with the balance being an inert gas such as Ar, or $CO_2$ gas at 100% by volume. The flow rate of the gas was appropriately adjusted within the range of 10 to 50 L/min.

Each of the welded joints obtained was tested as follows. Cross sections of ten cross-sectional macro samples were subjected to visual inspection to evaluate the quality of the weld.

Moreover, for each of the welded joints, ten cross-sectional macro samples were collected. Then the width W of the weld metal at a bottom position of the groove in each cross-sectional macro sample was measured as shown in Fig. 2. A value obtained by subtracting the length of the root gap G from the width W of the weld metal at the bottom position of the groove and dividing the resulting value by 2 was defined as the "penetration width."

The cross-sectional macro samples described above are cross-sectional macro samples taken at positions 100 mm, 130 mm, 160 mm, 190 mm, 220 mm, 250 mm, 280 mm, 310 mm, 340 mm, and 370 mm from the welding start side within a welding length of 500 mm.

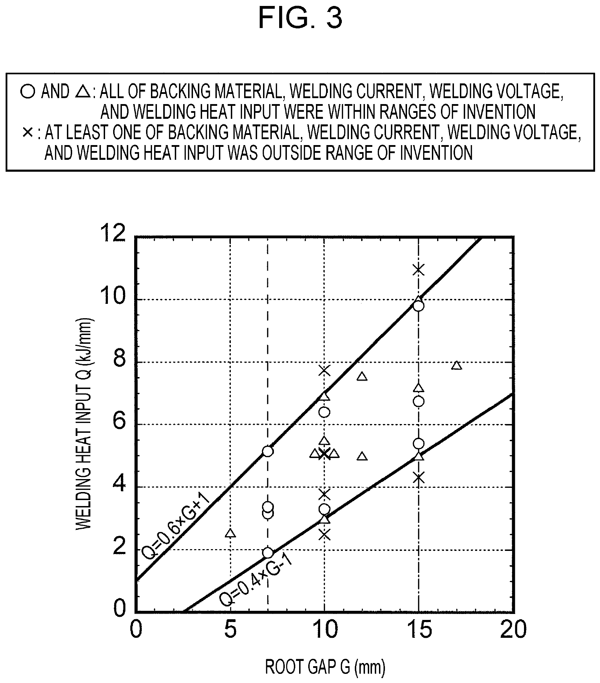

The results of the evaluation of the weld quality and penetration are shown in Fig. 3 and Table 2.

In the "Penetration stability" in Table 2, when the difference between the maximum penetration width and the minimum penetration width in the cross sections of the ten cross-sectional macro samples measured by the method described above was 2.0 mm or less, a "Good" rating was assigned. When the difference was larger than 2.0 mm, a "Poor" rating was assigned.

In the test for evaluating the weld quality, the cross-sections of the ten cross-sectional macro samples taken using the above-described method were subjected to visual inspection to evaluate the presence or absence of "hot cracking" in the welded joint. In the "Hot cracking" in Table 2, when one or more hot cracks, i.e., welding defects, occurred, a "Yes" was given. When no hot cracks occurred, a "No" was given.

To evaluate the penetration, the presence or absence of the adhesion of spatters having a grain diameter of 500 um or more to the walls of the groove after the root pass was performed. In the "Spatters" in Table 2, when the adhesion of spatters having the grain diameter described above to the walls of the groove was found, a "Yes" was given. When the adhesion of spatters having the grain diameter described above to the walls of the groove was not found, a "No" was given.

[Table 1]

| Symbol | Wire diameter (mm) | Components of welding wire (% by mass) | | | | | |
|---|---|---|---|---|---|---|---|
| | | C | Si | Mn | P | S | REMs |
| W1 | 1.2 | 0.04 | 0.62 | 1.87 | 0.005 | 0.006 | 0.000 |
| W2 | 1.2 | 0.05 | 0.58 | 1.90 | 0.004 | 0.009 | 0.015 |
| W3 | 1.2 | 0.04 | 0.69 | 1.94 | 0.004 | 0.008 | 0.030 |
| W4 | 1.2 | 0.04 | 0.65 | 1.88 | 0.004 | 0.007 | 0.100 |

(continued)

| Symbol | Wire diameter (mm) | Components of welding wire (% by mass) | | | | | |
|---|---|---|---|---|---|---|---|
| | | C | Si | Mn | P | S | REMs |
| W5 | 1.6 | 0.05 | 0.61 | 1.92 | 0.004 | 0.010 | 0.000 |
| W6 | 1.6 | 0.04 | 0.64 | 1.93 | 0.004 | 0.008 | 0.030 |
| * Balance: Fe and incidental impurities | | | | | | | |

[Table 2]

| Joint No. | Groove angle θ (°) | Root gap G (mm) | Polarity | Welding wire symbol | Backing material | Welding current I (A) | Welding voltage V (V) | Welding speed S (mm/min) | Welding heat input Q (kJ/mm) | Penetration stability | Hot cracking | Spatters | Remarks |
|---|---|---|---|---|---|---|---|---|---|---|---|---|---|
| 1 | 35 | 10 | Reverse polarity | W1 | Yes | 330 | 36 | 140 | 5.09 | Good | No | Yes | Inventive Example |
| 2 | 35 | 10 | Reverse polarity | W1 | Yes | 300 | 30 | 180 | 3.00 | Good | No | Yes | Inventive Example |
| 3 | 35 | 10 | Reverse polarity | W1 | Yes | 300 | 30 | 78 | 6.92 | Good | No | Yes | Inventive Example |
| 4 | 35 | 15 | Reverse polarity | W5 | Yes | 450 | 40 | 150 | 7.20 | Good | No | Yes | Inventive Example |
| 5 | 35 | 15 | Reverse polarity | W1 | Yes | 300 | 30 | 108 | 5.00 | Good | No | Yes | Inventive Example |
| 6 | 35 | 15 | Reverse polarity | W1 | Yes | 300 | 30 | 54 | 10.00 | Good | No | Yes | Inventive Example |
| 7 | 25 | 12 | Reverse polarity | W1 | Yes | 200 | 25 | 60 | 5.00 | Good | No | Yes | Inventive Example |
| 8 | 10 | 12 | Reverse polarity | W1 | Yes | 270 | 28 | 60 | 7.56 | Good | No | Yes | Inventive Example |
| 9 | 35 | 10 | Straight polarity | W2 | Yes | 330 | 36 | 140 | 5.09 | Good | No | No | Inventive Example |
| 10 | 35 | 5 | Reverse polarity | W1 | Yes | 330 | 36 | 280 | 2.55 | Good | No | No | Inventive Example |
| 11 | 35 | 17 | Reverse polarity | W1 | Yes | 330 | 36 | 90 | 7.92 | Good | No | No | Inventive Example |
| 12 | 0 | 7 | Straight polarity | W2 | Yes | 350 | 28 | 180 | 3.27 | Good | No | No | Inventive Example |
| 13 | 0 | 7 | Straight polarity | W2 | Yes | 280 | 25 | 220 | 1.91 | Good | No | No | Inventive Example |
| 14 | 0 | 7 | Straight polarity | W2 | Yes | 340 | 32 | 127 | 5.14 | Good | No | No | Inventive Example |

| Joint No. | Groove angle θ (°) | Root gap G (mm) | Polarity | Welding wire symbol | Backing material | Welding current I (A) | Welding voltage V (V) | Welding speed S (mm/min) | Welding heat input Q (kJ/mm) | Penetration stability | Hot cracking | Spatters | Remarks |
|---|---|---|---|---|---|---|---|---|---|---|---|---|---|
| 15 | 20 | 15 | Straight polarity | W3 | Yes | 300 | 30 | 100 | 5.40 | Good | No | No | Inventive Example |
| 16 | 20 | 15 | Straight polarity | W3 | Yes | 300 | 30 | 80 | 6.75 | Good | No | No | Inventive Example |
| 17 | 20 | 15 | Straight polarity | W3 | Yes | 300 | 30 | 54 | 10.00 | Good | No | No | Inventive Example |
| 18 | 0 | 10 | Straight polarity | W4 | Yes | 220 | 25 | 100 | 3.30 | Good | No | No | Inventive Example |
| 19 | 0 | 10 | Straight polarity | W4 | Yes | 300 | 32 | 90 | 6.40 | Good | No | No | Inventive Example |
| 20 | 35 | 10 | Straight polarity | W3 | No | 330 | 36 | 140 | 5.09 | Unweldable | Unweldable | Unweldable | Comparative Example |
| 21 | 35 | 10 | Straight polarity | W3 | Yes | 300 | 32 | 230 | 2.50 | Poor | No | No | Comparative Example |
| 22 | 35 | 15 | Straight polarity | W3 | Yes | 350 | 35 | 170 | 4.32 | Poor | No | No | Comparative Example |
| 23 | 35 | 10 | Straight polarity | W3 | Yes | 350 | 35 | 95 | 7.74 | Good | Yes | No | Comparative Example |
| 24 | 35 | 15 | Straight polarity | W3 | Yes | 350 | 35 | 67 | 10.97 | Good | Yes | No | Comparative Example |
| 25 | 35 | 10 | Straight polarity | W3 | Yes | 180 | 35 | 100 | 3.78 | Poor | No | No | Comparative Example |
| 26 | 35 | 10 | Straight polarity | W6 | Yes | 480 | 35 | 200 | 5.04 | Poor | No | No | Comparative Example |
| 27 | 35 | 10 | Straight polarity | W3 | Yes | 330 | 23 | 90 | 5.06 | Poor | No | No | Comparative Example |
| 28 | 35 | 10 | Straight polarity | W3 | Yes | 330 | 52 | 202 | 5.10 | Poor | No | No | Comparative Example |

(continued)

| Joint No. | Groove angle θ (°) | Root gap G (mm) | Polarity | Welding wire symbol | Backing material | Welding current I (A) | Welding voltage V (V) | Welding speed S (mm/min) | Welding heat input Q (kJ/mm) | Penetration stability | Hot cracking | Spatters | Remarks |
|---|---|---|---|---|---|---|---|---|---|---|---|---|---|
| 29 | 35 | 10 | Reverse polarity | W1 | Yes | 330 | 50 | 180 | 5.50 | Good | No | Yes | Inventive Example |
| 30 | 0 | 7 | Straight polarity | W6 | Yes | 350 | 28 | 180 | 3.27 | Good | No | No | Inventive Example |

* Formula 1: $0.4 \times G - 1 \leq Q \leq 0.6 \times G + 1$
* $Q = I \times V \times 60 / S / 1000$

In each of the Inventive Examples in the above Examples, the ceramic-made backing material 2 was attached to the bottom surface of the groove. The welding current I in the root pass was set to 200 to 450 A, and the welding voltage V in the root pass was set to 25 to 50 V. The welding heat input Q in the root pass was set so as to satisfy formula 1 described above. In the Inventive Examples, the penetration width obtained was stable while the occurrence of poor penetration and hot cracking was reduced. In Inventive Examples (Nos. 12 to 19 and 30) among the above Examples, REMs were added to the welding wires used (symbols W2, W3, W4, and W6), and the welding was performed with straight polarity. In this case, good weld quality could be obtained even when the groove angle θ and the root gap G were smaller, and the adhesion of spatters to the walls of the groove could be reduced.

Fig. 3 shows a correlation diagram obtained by plotting the data from the Examples arranged by the conditions for the root pass. The vertical axis of Fig. 3 represents the welding heat input Q (kJ/mm), and the horizontal axis of Fig. 3 represents the root gap G (mm).

As shown in the correlation diagram in Fig. 3, in Examples (with △ marks) in which the above-described conditions for the root pass were satisfied, good penetration stability and the prevention of hot cracking were achieved simultaneously. The "above-described conditions for the root pass" are specifically as follows. The ceramic-made backing material was used in the root pass, and the root pass was performed in one pass using a welding current I of 200 to 450 A, a welding voltage V of 25 to 50 V, and a welding heat input Q within the range defined by formula 1 above.

In Examples (with o marks), the above conditions for the root pass were satisfied, and also all the following conditions were satisfied. The groove angle θ was 35° or less, and the root gap G was 7 to 15 mm. Moreover, a welding wire (REM content: 0.015 to 0.100% by mass) was used, and the welding was performed with straight polarity. In this case, good penetration stability and the prevention of hot cracking were achieved simultaneously, and the adhesion of spatters to the walls of the groove could also be reduced.

Examples with × marks in the correlation diagram in Fig. 3 are Comparative Examples. In No. 20, the welding was performed while the welding current I, the welding voltage V, and the welding heat input Q were set within the root pass conditions described above. However, in this Example, no backing material was used. In this case, the molten metal could not be held, so that the welding could not be performed.

In Nos. 21 and 22, the welding heat input Q in the above-described root pass conditions was excessively small. Therefore, the bottom portion of the groove was not easily melted, and the penetration was poor. In Nos. 23 and 24, the welding heat input Q in the above-described root pass conditions was excessively high. Therefore, the height of the weld metal with respect to the width of the weld metal was large, and hot cracking occurred.

In No. 25, the welding current I in the above-described root pass conditions was excessively small. Therefore, the bottom portion of the groove was not easily melted, and the penetration was poor. In No. 26, the welding current I in the above-described root pass conditions was excessively high. Therefore, the penetration was unstable.

In No. 27, the welding voltage V in the above-described root pass conditions was excessively small. Therefore, the penetration was unstable. In No. 28, the welding voltage V in the above-described root pass conditions was excessively high. Therefore, the bottom portion of the groove was not easily melted, and the penetration was poor.

1    steel plate
2    backing material
3    weld metal

**Claims**

1. A gas-shielded arc welding method for one-side butt welding of steel plates, the method comprising, with a ceramic-made backing material attached to a bottom surface of a groove, performing root pass in one pass using a welding current I (A) of 200 to 450 A, a welding voltage V (V) of 25 to 50 V, and a welding heat input Q (kJ/mm) within a range defined by the following formula 1:

$$0.4 \times G - 1 \leq Q \leq 0.6 \times G + 1 \qquad (\text{formula 1})$$

where G in formula 1 is a root gap (mm).

2. The gas-shielded arc welding method according to claim 1, wherein the groove has an groove angle θ of 35° or less.

3. The gas-shielded arc welding method according to claim 1 or 2, wherein the groove has an groove angle θ of 20° or less, and the root gap G (mm) is 7 to 15 mm.

**4.** The gas-shielded arc welding method according to any one of claims 1 to 3, wherein, in the root pass, a welding wire containing 0.015 to 0.100% by mass of a rare earth metal (REM) is used, and the welding is performed with straight polarity.

**5.** A welded joint welded using the gas-shielded arc welding method according to any one of claims 1 to 4.

**6.** A method for producing a welded joint, the method using the gas-shielded arc welding method according to any one of claims 1 to 4.

# FIG. 1

# FIG. 2

# FIG. 3

○ AND △: ALL OF BACKING MATERIAL, WELDING CURRENT, WELDING VOLTAGE,
AND WELDING HEAT INPUT WERE WITHIN RANGES OF INVENTION
× : AT LEAST ONE OF BACKING MATERIAL, WELDING CURRENT, WELDING VOLTAGE,
AND WELDING HEAT INPUT WAS OUTSIDE RANGE OF INVENTION

## INTERNATIONAL SEARCH REPORT

| | International application No. |
| | PCT/JP2022/010756 |

**A. CLASSIFICATION OF SUBJECT MATTER**

***B23K 37/06*** (2006.01)i; ***B23K 9/16*** (2006.01)i
FI: B23K9/16 Z; B23K37/06 F

According to International Patent Classification (IPC) or to both national classification and IPC

**B. FIELDS SEARCHED**

Minimum documentation searched (classification system followed by classification symbols)

B23K37/06; B23K9/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 05-293653 A (NKK CORP.) 09 November 1993 (1993-11-09) | 1-2, 5-6 |
| | paragraphs [0008]-[0014], fig. 1-7 | |
| Y | | 4 |
| A | | 3 |
| Y | JP 2007-118068 A (JFE STEEL KK) 17 May 2007 (2007-05-17) | 4 |
| | claims, paragraphs [0010], [0030]-[0046], fig. 1 | |
| A | JP 10-029091 A (SUMITOMO HEAVY IND., LTD.) 03 February 1998 (1998-02-03) | 1-6 |
| | entire text, all drawings | |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/010756**

| Patent document cited in search report | Publication date (day/month/year) | Patent family member(s) | Publication date (day/month/year) |
|---|---|---|---|
| JP 05-293653 A | 09 November 1993 | (Family: none) | |
| JP 2007-118068 A | 17 May 2007 | (Family: none) | |
| JP 10-029091 A | 03 February 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53081453 A
- JP 62118975 A
- JP 2000141031 A